Europäisches Patentamt

European Patent Office

Office européen des brevets

(19)

(11) Publication number: **0 107 466**
**A2**

## EUROPEAN PATENT APPLICATION

(21) Application number: **83306282.1**

(51) Int. Cl.³: **G 07 F 7/02**

(22) Date of filing: **17.10.83**

---

(30) Priority: **19.10.82 GB 8229808**

(43) Date of publication of application: **02.05.84**
**Bulletin 84/18**

(84) Designated Contracting States: **AT BE CH DE FR IT LI LU NL SE**

(71) Applicant: **Hawker Siddeley Revenue Controls Limited, 177 Nutfield Road, Merstham Surrey, RH1 3HH (GB)**

(72) Inventor: **Anderson, Alan Fyfe, 24 Park Way, Horley Surrey (GB)**
Inventor: **Easterby, Robert William, 66 Springcroft Hartley, Dartford Kent (GB)**

(74) Representative: **Bird, Vivian John et al, PAGE & CO. Temple Gate House, Temple Gate Bristol, BS1 6PL (GB)**

(54) **A product-accessing system.**

(57) A programmable-meter system for controlling the accessing to and dispensing of elctricity or other public utility service or other dispensable product. A master card programmes the meter to deduct from the face value of a value card a sum encoded onto the master card whilst the value card accesses the product to the consumer «crediting» him product to the value of the difference between the face value of the value card and the sum encoded on the master card.

EP 0 107 466 A2

## A product-accessing System

This invention relates to product-accessing systems and more particularly, although not exclusively, to systems for allowing access to electricity or other public utility services.

One form of electricity-supply-accessing is the well-known pre-payment slot meter by which, by the insertion of a coin in a meter electricity to the value of the coin can be accessed, the meter monitoring the amount of electricity taken against the amount corresponding to the value of the coin. Such accessing systems are also well-known for gas supplies.

However, such systems suffer serious defects. Firstly, the meter may become over filled with coins thus preventing further availability to the electricity etc. Secondly, the meters are susceptible to being broken into by either the consumer himself or by burglars. Thirdly, collectors on behalf of the authority may be involved in carrying substantial sums of money in the course of emptying and reading meters in their rounds.

The alternative form of payment (by payment against a bill after the meter has been read) incurs cash-flow and bad-debt problems for the authority. This situation has been worsened for the authorities by growing public opinion (and possible future legislation) inhibiting the authorities from the ultimate sanction of discontinuance of supply.

The present invention seeks to obviate these disadvantages by providing what is, in effect, a pre-payment system dispensing with the need to use coins.

The present invention provides a product-accessing system comprising a programmable meter actuable to allow access to the product and, thereafter, to measure the value of the product taken; a master token by which the meter can be programmed to deduct a value indicated on the token as being required before the meter can be actuated to allow access to the product; and a value token by which the meter can be actuated to allow access to the product and credit an amount of the product the value of which is the difference between the face value of the value token and the value deduction previously programmed into the meter by the master token.

The product may be an energy form such as heat in a district-heating system or electricity or other public utility.

Either or each of the tokens may be in the form of a plastic card which carries in magnetic or other form a code indicative of the value to be deducted in the case of the master token or the face value in the case of the value token.

The meter may include timing means by which, when the meter is actuated to allow access to the product, such access is continued to be permitted for a predetermined period of time once access has been allowed by the value token. In this event, any excess of product taken during that period of time over that represented by the difference in value of the face value of the value token and the value deduction previously programmed into the meter by the master card, may be recorded in the meter with this system, such excess may be fed back to the programme of the meter to be added to the value programmed into the meter by the master token as being the value to be deducted from the face value of the value card before access is allowed to the product. Alternatively, the excess of product may merely be recorded in the meter so that in the event of there being a cumulative excess of product taken over an extended period of time, a new master token can be issued which programmes the meter to deduct a larger value than the previous master token.

The meter may incorporate means by which the number of value cards used with the meter can be recorded.

Embodiments of the present invention will now be described in greater detail by way of example only.

An electricity meter actuable to connect the consumer to the supply and to measure the quantity of electricity consumed, is provided with programmable means.

These means are programmed by the insertion into the meter of a master card bearing, in magnetic form, coded infomation which, inter alia, indicates a value which is to be deducted from a value card before the quantity of electricity consumed starts to be measured. The deducted value may, for example, be only a proportion of the standing charge for the service. It may also, however, include additionally, a proportion of a debt owed to the authority by the consumer from the past. This master card is removable for re-use by the authority after the information carried by it has been interned into the programmable means of the meter.

To connect to the electricity supply, the consumer now inserts a value card which, after insertion is retained in the meter after having been cancelled (so as not to be re-usable) by the meter.

Insertion of the card does two things. Firstly, it connects, by actuation of the meter, the consumer to the electricity supply. Secondly, it programmes the meter to "credit" the consumer for the supply of electricity to a value which is the difference between the face value of the card and the amount for which, by the master card, the meter has been programmed to deduct from the face value of the value card.

For example: Suppose the standing charge is £52/annum and suppose the consumer owes the authority £104 which the authority wishes to collect over the next twelve months. Suppose also that the consumer's average consumption over the year is calculated at £104's worth/annum. In this case, the consumer may use a value card with a face value of £5 and the master card would be programmed to deduct £3 (£1 towards the standing charge and £2 towards the debt). Having once inserted the master card, the meter would be programmed (until subsequently re-programmed by the insertion of another master card) to deduct £3. Hence, whenafter, when the consumer inserted the £5 value card, £3 from the value would immediately be deducted by the programmed meter and the consumer "credited" in the meter for the supply of electricity to a value of only £2 - an average week's supply.

In one alternative, when the consumer had used the £2's worth of electricity, the supply would (as with a conventional pre-payment meter) be automatically terminated and would only be re-connected by the insertion of a further value card.

In another alternative (which would avoid the termination of supply), the insertion of a value card of a face value in excess of the value to be deducted would again, connect the consumer to the supply but, in this case, the meter being provided with timing mechanism, the consumer would be connected for a fixed period of time (say, 1 week) irrespective of the amount of electricity which he consumed. With this system, if the consumer, in the week, under-consumed the value available to him, although he would be disconnected at the week's end and it would require the insertion of a further value card to re-establish the connection, the meter would "credit" him for any unused value of the value card. Conversely, if in any one week, the consumer over-consumed on the amount of electricity made available to him by the value card, such over-consumption would be "debited" against the next successive value card.

In this alternative, should the consumer have either over-consumed or under-consumed over an extended period of time (say, the quarterly reading of the meter), the value to be deducted by the meter could be revised by re-programming of the meter. This would be effected by the issue of a new master card encoded with the revised deduction to be made.

In either of the above alternatives, the master card and the value cards may each be encoded with an identity of the consumer so that only properly issued value cards could be used in the same meter as the particular master card.

Whilst the above examples relate, specifically, to electricity consumption, it will be well appreciated that the invention is equally applicable to the accessing to not only other energy sources (such as district heating or gas) and the services of other public utilities such as water, it could equally be used for accessing to other products dispensed under the control of some form of meter.

The master and value cards may not be in that form but in the form of any encodable token which can programme a programmable meter.

The meter may also record the number of value cards or tokens inserted so as further to reduce the possibility of fraud.

## Claims

1.  A product-accessing system comprising a programmable meter actuable to allow access to the product and, thereafter, to measure the value of the product taken; a master token by which the meter can be programmed to deduct a value indicated on the token as being required before the meter can be actuated to allow access to the product; and a value token by which the meter can be actuated to allow access to the project and credit an amount of the product the value of which is the difference between the face value of the value token and the value deduction previously programmed into the meter by the master token.

2.  A system as claimed in Claim 1 wherein the product is an energy form such as heat in a district-heating system or electricity or other public utility.

3.  A system as claimed in either Claim 1 or Claim 2 wherein either or each of the tokens may be in the form of a plastic card which carries in magnetic or other form a code indicative of the value to be deducted in the case of the master token or the face value in the case of the value token.

4.  A system as claimed in any one of the preceding claims wherein the meter includes timing means by which, when the meter is actuated to allow access to the product, such access is continued to be permitted for a predetermined period of time once access has been allowed by the value token.

5.  A system as claimed in Claim 4 in which any excess of product taken during that period of time over that represented by the difference in value of the face value of the value token and the value deduction

0107466

8

previously programmed into the meter by the master card is recorded in the meter.

6. A system as claimed in Claim 5 wherein such excess is fed back to the programme of the meter to be added to the value programmed into the meter by the master token as being the value to be deducted from the face value of the value card before access is allowed to the product.

7. A system as claimed in Claim 5 wherein the excess of product is merely recorded in the meter so that in the event of there being a cumulative excess of product taken over an extended period of time, a new master token can be issued which programmes the meter to deduct a larger value than the previous master token.

8. A system according to any one of the preceding claims wherein the meter incorporates means by which the number of value cards used with the meter can be recorded.